(19)

Europäisches
Patentamt
European
Patent Office
Office européen
des brevets

(11) **EP 2 506 458 A1**

(12) **EUROPEAN PATENT APPLICATION**

(43) Date of publication:
**03.10.2012 Bulletin 2012/40**

(51) Int Cl.:
*H04B 10/155* (2006.01)    *H04L 27/34* (2006.01)

(21) Application number: **11290152.5**

(22) Date of filing: **29.03.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Renaudier, Jeremie**
  **91620 Nozay (FR)**
• **Bononi, Alberto**
  **43126 Parma (IT)**

• **Serena, Paolo**
  **29027 Podenzano (IT)**
• **Salsi, Massimiliano**
  **91620 Nozay (FR)**
• **Bertran Pardo, Oriol**
  **91620 Nozay (FR)**
• **Mardoyan, Haik**
  **91620 Nozay (FR)**

(74) Representative: **MERH-IP**
**Matias Erny Reichl Hoffmann**
**Paul-Heyse-Strasse 29**
**80336 München (DE)**

(54) **Coherent transponder for optical PS-QPSK signals**

(57)    The present document relates to optical transmission systems. In particular, the present document relates to a transmitter and/or a receiver for optical polarization switches (PS) QPSK (quadrature phase shift keying) signals. An apparatus (500) for an optical transmitter of an optical polarization switched M-PSK signal comprising a first and a second polarization, with M = $2^m$ and $m \geq 1$ is described. The apparatus (500) comprises mapping means (200) configured to map, at a time instant k=1,...,K, $m$ information bits to an M-PSK constellation point, thereby generating a first symbol at time instant k for the first polarization; assign, at the time instant k, one further information bit by generating a second symbol at time instant k for the second polarization, wherein the second symbol at time instant k corresponds to the first symbol at time instant k, or corresponds to the constellation point opposite the constellation point of the first symbol at time instant k; and repeat the mapping and assigning steps for all k=1,...,K to generate a sequence of first and second symbols for the first and second polarization, respectively. The apparatus (500) further comprises decorrelation means (501, 502) configured to decorrelate the first symbol at time instant k and the second symbol at time instant k, for all k=1,...,K.

Fig. 1

**Description**

The present document relates to optical transmission systems. In particular, the present document relates to a transmitter and/or a receiver for optical polarization switched (PS) QPSK (quadrature phase shift keying) signals.

The PS QPSK modulation format may be beneficial for two main reasons. Firstly, it may be shown that the PS-QPSK modulation format has a high (possibly the highest) sensitivity to noise. Compared to PDM-QPSK (polarization division multiplexing-quadrature phase shift keying) signals which may be widely used for the realization of 100Gb/s transponders, i.e. optical transmitters and/or receivers configured to transmit and/or receive optical signals at 100Gb/s with polarization division multiplexing, PS-QPSK has a theoretical asymptotic sensitivity advantage of 1.76 dB. Numerical studies may be performed to show this sensitivity improvement brought by PS-QPSK. Secondly, numerical investigations may show that PS-QPSK has improved nonlinear tolerance compared to PDM-QPSK in WDM transmission scenarios, thus making PS-QPSK an interesting candidate for 100 Gigabit Ethernet links. Another interesting feature of PS-QPSK is that it can be used as a fall-back alternative to PDM-QPSK in the context of adaptive bit rate transponders. Typically, when the PDM-QPSK format cannot reach a target distance without regeneration over an optical link degraded by additional losses for example, the optical link could continue to operate at 75% of the data rate (using PS-QPSK instead of PDM-QPSK), but with a significant sensitivity improvement. As will be outlined in the present document, optical transmitters and receivers which are configured to adapt the modulation format from PDM-QPSK to PS-QPSK (and vice versa) can be provided with only minor hardware adjustments of conventional PDM-QPSK transponders.

In view of the above, the present document addresses the problem of providing a modulation format for optical signals which may be transmitted over a transmission channel. The modulated optical signal should exhibit an increased sensitivity to noise and an increased robustness to distortions caused by fiber cross nonlinearities.

According to an aspect, an apparatus for an optical transmitter of an optical polarization switched M-PSK signal comprising a first and a second polarization is described. The first and second polarization may be orthogonal with respect to one another. M typically indicates the number of constellation point within the PSK (phase shift keying) constellation diagram. In an embodiment M = $2^m$ and $m \geq 1$ or $m \geq 2$, e.g. $m$ =1, 2, 3, 4, 5, 6, 7.

The apparatus may comprise mapping means configured to map, at a time instant k=1,...,K (K is typically proportional to the length of the bit stream which is to be encoded), $m$ (different) information bits to an M-PSK constellation point, thereby generating a first symbol at time instant k for the first polarization. The symbols are typically represented as complex symbols having the same amplitude (usually one) and a phase from a set of M different phases. The mapping means may be further configured to assign, at the time instant k, one further information bit by generating a second symbol at time instant k for the second polarization, wherein the second symbol at time instant k corresponds to the first symbol at time instant k, or corresponds to the constellation point opposite to the constellation point of the first symbol at time instant k. In other words, one further information bit may be encoded by selecting the second symbol equal to the first symbol or at opposite phase to the first symbol. As such, at each time instant k, $m$ +1 information bits may be encoded.

The mapping means may be configured to repeat the mapping and assigning step for all k=1,...,K to generate a sequence of first and second symbols for the first and second polarization, respectively.

The resulting sequences of first and second symbols may be used to generate an optical polarization switched M-PSK signal. For this purpose, the apparatus may comprise a modulation unit configured to modulate a phase of a first polarization of an optical signal using symbol phases of the sequence of first symbols; and modulate a phase of a second polarization of the optical signal using symbol phases of the sequence of second symbols. Typically, the first and second polarizations are orthogonal with respect to one another. The modulated optical signal will then be an optical polarization switched M-PSK signal.

The apparatus may comprise decorrelation means configured to decorrelate the first symbol at time instant k and the second symbol at time instant k, for all k=1,...,K. The decorrelation means may be configured to decorrelate a subsequence of first symbols at a plurality of time instants from a subsequence of second symbols at the same plurality of time instants. In particular, for all k=1,...,K, a subsequence of first symbols at time instants [k,k+Q] may be decorrelated from a subsequence of second symbols at time instants [k,k+Q]. Q may be an integer value, greater or equal to one, which may be dependent on the length of a polarization de-multiplexer used at a corresponding optical receiver.

The decorrelation means may comprise a delay unit configured to delay the sequence of first symbols and the sequence of second symbols with respect to one another by a pre-determined delay value. The pre-determined delay value may be greater than half of a symbol length (also referred to as a length measured in a number of symbols or window length) of a polarization de-multiplexing filter configured to de-multiplex the first and second polarizations from the optical polarization switched M-PSK signal. In other words, the pre-determined delay value may be greater than half of a symbol length or window length of a polarization de-multiplexing filter used within a corresponding optical receiver configured to receive optical PS M-PSK modulated signals comprising the first and second polarization subsequent to transmission over a (possibly distorted) optical transmission channel.

As such, the decorrelation means may be configured to ensure that within the processing window of the polarization de-multiplexing filter (given by the symbol length or window length of the filter), the symbols of the sequence of first symbols and the symbols of the sequence of second symbols are decorrelated. If the symbol length or window length of the filter is given by N, Q may be greater than N/2.

According to another aspect, an optical transmitter for a polarization switched M-PSK modulated optical signal is described. The optical transmitter may comprise any of the features outlined in the present document. In particular, the optical transmitter may comprise the apparatus outlined above.

According to a further aspect, a digital signal processor of a coherent optical receiver for a polarization switched M-PSK modulated optical signal is described. As indicated above, the polarization switched M-PSK modulated optical signal typically comprises a first and an orthogonal second polarization. Typically, $M = 2^m$ and $m \geq 1$ or $m \geq 2$, as outlined above.

The digital signal processor may comprise reception means configured to receive a complex inphase signal and a complex quadrature signal, indicative of the sequence of first symbols and the sequence of second symbols at time instants k=1,...,K. Typically, the complex inphase signal and the complex quadrature signal are derived from the received polarization switched M-PSK modulated optical signal using a coherent optical detector followed by analog-to-digital converters.

The complex inphase signal and the complex quadrature signal may have been obtained by the following process, which specifies the characteristics of the inphase signal and the quadrature signal. In particular, the sequences of first and second symbols, which are reflected within the inphase signal and the quadrature signal, may have been obtained by mapping, at the time instant k, *m* information bits to an M-PSK constellation point, thereby generating a first symbol at time instant k; and by assigning, at the time instant k, one further information bit by generating a second symbol at time instant k, wherein the second symbol at time instant k corresponds to the first symbol at time instant k, or corresponds to the constellation point opposite the constellation point of the first symbol at time instant k; and by repeating the mapping steps for all k=1,...,K to generate the sequences of first and second symbols. In other words, the sequences of first and second symbols may be symbol sequences which- when modulated onto two orthogonal polarizations of an optical signal - provide a polarization switched M-PSK modulated optical signal.

In addition, the sequences of first and second symbols may have been obtained by decorrelating the first symbol at time instant k and the second symbol at time instant k, for all k=1,...,K. By way of example, the decorrelation may have been performed by delaying the first and second symbol with respect to one another, as outlined above. As such, the sequences of first and second symbols may have been determined by an apparatus as outlined above.

The sequences of first and second symbols may have been modulated onto the first and second polarization of the polarization switched M-PSK modulated optical signal, respectively. It should be noted that the above mentioned steps performed on the sequences of first and second symbols and on the optical signal may be performed e.g. within a corresponding optical transmitter.

Furthermore, the polarization switched M-PSK modulated optical signal may have been transmitted over a distorting transmission channel, thereby yielding a distorted polarization switched M-PSK modulated optical signal. As outlined above, this (distorted) polarization switched M-PSK modulated optical signal may have been received at an optical receiver and may have been converted into the complex inphase signal and the complex quadrature signal. As such, the inphase signal and the quadrature signal may have certain characteristics described by the process outlined above.

The digital signal processor may comprise a polarization de-multiplexer configured to provide a first signal indicative of the sequence of first symbols and a second signal indicative of the sequence of second symbols. In other words, the polarization de-multiplexer may isolate a first signal comprising the sequence of first symbols and a separate second signal comprising the sequence of second symbols from the inphase signal and the quadrature signal, which both comprise a mixture of both symbol sequences. For this purpose, the polarization de-multiplexer may comprise a polarization demultiplexing filter with a pre-determined symbol length or window length (i.e. the length of the window of the signal processed by the filter at any time instant k). Typically, the filter is a butterfly filter.

The digital signal processor may comprise inverse decorrelation means configured to apply to the first and second signal an operation which is inverse to the decorrelating applied to the sequences of first and second symbols, thereby re-correlating the sequences of first and second symbols. In other words, the inverse decorrelation means of the digital signal processor (placed e.g. at the optical receiver) and the correlating step performed, e.g., within the optical transmitter may be inverse operations with respect to one another.

In particular, the inverse decorrelation means may comprise a delay unit configured to delay the sequence of first symbols and the sequence of second symbols with respect to one another by a pre-determined delay value. The pre-determined delay value may be greater than half of the symbol length or window length of the polarization de-multiplexing filter.

Alternatively or in addition, the digital signal processor may comprise a carrier phase recovery unit configured to estimate a carrier phase of the optical signal in the first and orthogonal second polarization from the first and second signal, respectively. Typically, the carrier phase is estimated separately for the first signal and the second signal. The carrier phase recovery unit may be further configured to compensate phase values of the sequences of first and second symbols using the estimate of the phases of the optical signal in the first and orthogonal second polarization, respectively. Typically, the compensation is performed separately on the first and second signal, based on separate carrier phase estimates from the first and second signal.

Alternatively or in addition, the digital signal processor may comprise a phase ambiguity detector configured to modify a phase value of the first symbol of the sequence of first symbols relative to a phase value of the corresponding second symbol of the sequence of second symbols. The modification may be performed based on the fact that the phases of corresponding first and second symbols at time instant k should be equal or should be shifted by Π. As a result of the assigning step used to generate the second symbol based on the first symbol, the first and second symbol at time instant k should either have the same phase or should have an opposite phase. This phase relationship may have been lost, e.g. due to the transmission of the optical PS-MPSK signal over a distorted transmission channel or due to carrier phase estimation and compensation performed separately on the first and the second signal. The phase ambiguity detector may be configured to use this information and to compensate the relative phase difference between the first and second symbol.

In particular, the phase ambiguity detector may be configured to determine a phase difference between corresponding symbols of the sequences of first and second symbols. In other words, at time instant k, a phase difference between a symbol of the sequence of first symbols and a symbol of the sequence of second symbols may be determined. This may be done for all k=1,...,K. The phase difference may be determined based on the first signal and the second signal.

In particular, the phase difference (or an estimate of the phase difference) of the first and second symbol at time instant k (or k) may be determined as

$$\theta_\Delta = unwrap\left\{\frac{1}{2}\arg\left[\frac{1}{\hat{N}_M}\sum_{k=-\hat{N}_M/2}^{\hat{N}_M/2}\left(E_x^*(k)E_y(k)\right)^2\right]\right\},$$

wherein $E^*_x(k)$ is a conjugate of the first symbol at time instant k, $E_y(k)$ is the second symbol of the sequence of second symbols at time instant $k$, and $\hat{N}_M$ is a number of taps used to determine the estimate of the phase difference. The input argument of the unwrap function may be limited the interval $\left[-\frac{\pi}{M},\frac{\pi}{M}\right)$, whereas the output of the unwrap function may be ambiguous at multiples of $\frac{2\pi}{M}$. The objective of phase unwrapping is to remove 'discontinuity' in the estimate of the phase difference and to ensure that the phase estimate follows the trajectory of the physical phase.

The phase ambiguity detector may be further configured to round the phase difference to the nearest multiple

of $\frac{\pi}{2}$. This rounding operation may be beneficial in order to remove noise from the estimate of the phase difference.

Furthermore, phase ambiguity detector may be configured to modify the phase value of the first or second symbol with the determined (rounded or not rounded) estimate of the phase difference.

The digital signal processor may comprise a decision unit configured to determine $m+1$ information bits from corresponding symbols at a time instant k of the sequences of first and second symbols. The decision unit may be positioned downstream of the polarization de-multiplexer, the carrier phase recovery unit and/or the phase ambiguity detector.

According to a further aspect, an optical receiver for an optical PS-MPSK signal is described. The optical receiver may comprise a digital signal processor as outlined in the present document. Furthermore, the optical receiver may comprise an optical coherent detector configured to convert a received optical PS-MPSK signal into an electrical inphase component and an electrical quadrature component. In addition, the optical receiver may comprise an analog-to-digital converter unit configured to convert the electrical components into a digital complex inphase signal and a digital complex quadrature signal.

According to a further aspect, an optical transmission system comprising an optical transmitter according to any of the aspects outlined in the present document, and an optical receiver according of the aspects outlined in the present document is described.

According to another aspect, a method for generating a de-correlated PS-MPSK signal is described. The method may comprise the step of mapping, at a time instant k=1,...,K, $m$ information bits to an M-PSK constellation point, thereby generating a first symbol at time instant k for the first polarization. The method may proceed in assigning, at the time instant k, one further information bit by generating a second symbol at time instant k for the second polarization, wherein the second symbol at time instant k corresponds to the first symbol at time instant k, or corresponds to the constellation point opposite the constellation point of the first symbol at time instant k. Furthermore, the method may repeat the mapping and assigning steps for all k=1,...,K to generate a sequence of first and second symbols for the first and second polarization, respectively. In addition, the method may comprise the step of decorrelating the first symbol at time instant k and the second symbol at time instant k, for all k=1,...,K. The decorrelating step may be performed in various ways, e.g. by delaying the first and second symbol with respect to one another.

According to a further aspect, a corresponding method for receiving a de-correlated PS-MPSK signal is described. The method may be directed at detecting sequences of first and second symbols from the de-correlated PS-MPSK signal. The de-correlated PS-MPSK signal may have been determined by the above mentioned method. Furthermore, the PS-MPSK signal may have been transmitted over a distorting optical transmission channel, e.g. an optical fiber or a wavelength division multiplex (WDM) channel transmitted via an optical fiber. As such, the received de-correlated PS-MPSK signal may be a distorted de-correlated PS-MPSK signal.

The method may comprise the step of receiving a complex inphase signal and a complex quadrature signal, indicative of the sequence of first symbols and the sequence of second symbols at time instants k=1,...,K. The inphase signal and the quadrature signal may have been determined from the received PS-MSPK signal, e.g. via coherent detection. The method may proceed in determining a first signal indicative of the sequence of first symbols and a second signal indicative of the sequence of second symbols, e.g. via polarization de-multiplexing. Furthermore, the method may comprise the step of applying to the first and second signal an operation which is inverse to the decorrelating (outlined in the context of the method for generating a de-correlated PS-MPSK signal), thereby re-correlating the sequences of first and second symbols.

According to another aspect, a de-correlated PS-MPSK signal is described. The de-correlated PS-MSPK signal may have been determined according to the above described method and according to any of the features outlined in the present document.

According to a further aspect, a software program is described. The software program may be stored on a computer-readable medium (which may be tangible or otherwise non-transitory) as instructions that are adapted for execution on a processor and for performing the aspects and features outlined in the present document when carried out on a computing device.

According to another aspect, a storage medium comprising a software program is described. The storage medium may be memory (e.g. RAM, ROM, etc.), optical media, magnetic media and the like. The software program may be adapted for execution on a processor and for performing the aspects and features outlined in the present document when carried out on a computing device.

According to a further aspect, a computer program product is described. The computer program product may comprise executable instructions for performing the aspects and features outlined in the present document when executed on a computing device.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner.

The invention is explained below in an exemplary manner with reference to the accompanying drawings, wherein

Fig. 1 shows example representations of PS-QPSK symbols;
Fig. 2 illustrates an example mapping unit for generating a PS-QPSK symbol using a PDM-QPSK modulator;
Fig. 3 shows example blocks of a coherent optical receiver for PDM-QPSK signals;
Fig. 4a illustrates an example for the performance of polarization de-multiplexing on PS-QPSK modulated signals;
Fig. 4b illustrates example correlations between PS-QPSK symbols;
Fig. 5 illustrates an example transmitter and an example receiver for PS-QPSK modulated signals;
Fig. 6 shows example blocks of a coherent optical receiver for PS-QPSK signals; and
Fig. 7 illustrates example measurement results of the performance of PS-QPSK vs. PDM-QPSK.

As outlined above, the present document describes a modulation format for optical signals which exhibit an increased sensitivity to noise and an increased robustness to distortions caused by fiber cross nonlinearities. In order to achieve this goal, it is proposed to use the PS-QPSK (polarization-switched QPSK) modulation format carrying 3 bits per symbol, instead of the PDM-QPSK modulation format. For 100Gb/s transmission, this yields a symbol rate in the range of 37Gbaud. Consequently, the PS-QPSK modulation format is compliant with the 50GHz ITU grid.

Furthermore, the PS-QPSK modulation format can be obtained with a standard PDM-QPSK modulator. However, contrary to standard PDM-QPSK signals, the information carried by the polarization tributaries in PS-QPSK are correlated, thereby yielding a better tolerance to non linear effects. Due to this correlation between the polarization tributaries, the two polarization tributaries cannot be processed independently for PS-QPSK. Consequently, the present document describes measures on how to synchronize in phase the two polarization tributaries of a PS-QPSK modulated signal at the receiver side.

In other words, an optical transponder for PS-QPSK modulated optical signals is described. It has been observed that PS-QPSK is a power-efficient (possibly the most power-efficient) modulation format in coherent optical communications. Power efficiency optimality implies that, in the linear propagation regime with additive Gaussian noise, PS-QPSK may be superior to any other modulation format at equal bit rate. For instance, it has been found that at small bit error rate (BER) values, i.e., at asymptotically large optical signal to noise ratios (OSNR), PS-QPSK has an OSNR gain =1.76 dB over the conventional polarization division multiplexed QPSK (PDM-QPSK) format, while at BER=$10^{-3}$ the OSNR gain decreases to 0.97 dB.

Besides the beneficial behaviour in the linear regime, it should be noted that the PS-QPSK format is a variant of PDM-QPSK. However, only one polarization tributary of PS-QPSK contributes to in-phase crosstalk (and no in-quadrature crosstalk) on the other polarization. This leads to robustness of PS-QPSK in nonlinear propagation by relieving polarization de-multiplexing noise.

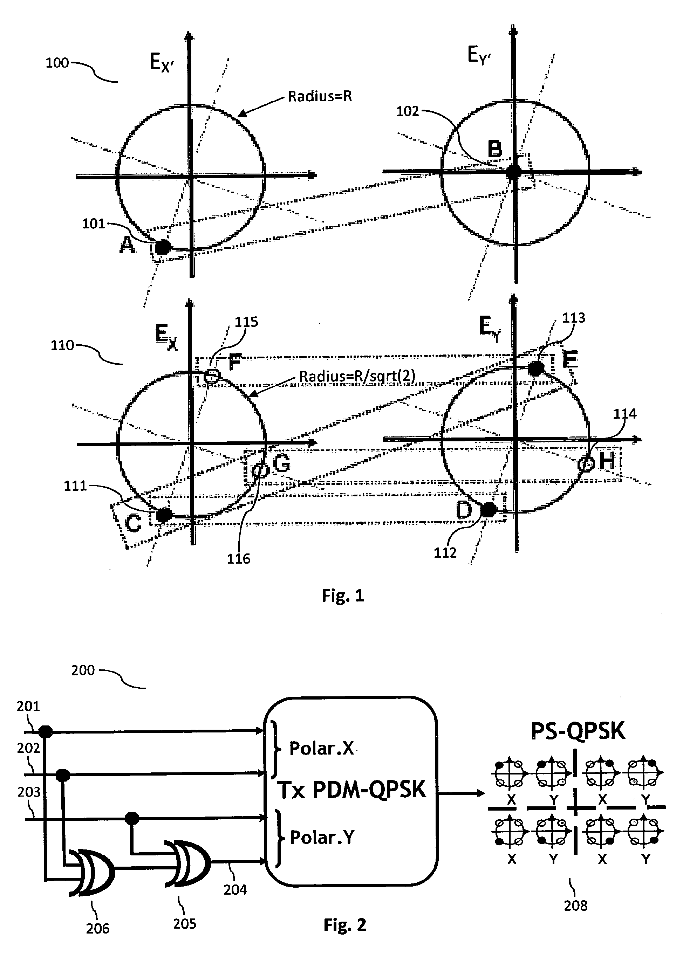

The PS-QPSK modulation format is an 8-level, 3 bit per symbol modulation format. At each symbol time, one information bit of the 3 bits selects one of two orthogonal polarizations over which a QPSK symbol, selected by the remaining two information bits, is transmitted. Nothing is transmitted on the remaining polarization at that symbol time. Fig. 1 (top row) shows a PS-QPSK transmitted symbol 100 on the complex-envelope X' and Y' planes: one of four available QPSK symbols is selected on X', while zero is transmitted on Y'. In the example, the dots A 101 and B 102 represent one symbol. The other four symbols are obtained by having a zero on X', and one of four QPSK symbols on Y'. Fig. 1 (bottom row) shows an alternative representation of PS-QPSK symbols 110 obtained from the first representation after a change of the polarization basis, i.e., after a polarization transformation. It should be noted that the radius of the alternative representation (bottom row) is the radius of the first representation divided by the square root of 2. The inverse polarization transformation bringing from the bottom-row representation in the figure to the top-row representation is given by

$$\begin{bmatrix} E_x \\ E_y \end{bmatrix} = \frac{1}{\sqrt{2}} \begin{bmatrix} 1 & 1 \\ -1 & 1 \end{bmatrix} \begin{bmatrix} E_x \\ E_y \end{bmatrix}$$

so that symbol (C,D) illustrated by dots 111, 112 in the bottom-row representation is the transform of (A,B) illustrated by dots 101, 102 in the top-row representation. Three more example symbols (C,E) illustrated by dots 111, 113, (F,E) illustrated by dots 115, 113, and (G,H) illustrated by dots 116, 114 are shown. The bottom-row representation 110 shows that:

- PS-QPSK symbols can be obtained as a subset of standard PDM-QPSK symbols, and
- PS-QPSK symbols are such that the two polarization tributaries are either in-phase or with opposite phases, but never in quadrature (i.e. with a +/- 90 degrees phase shift).

Fig. 2 illustrates a mapping unit 200 which may be used to associate the three information bits of a PS-QPSK symbol to the eight PDM-QPSK symbol subset which represent the eight PS-QPSK symbols. The three information bits 201, 202, 203 are directly mapped to three of the four bits of a PDM-QPSK symbol. The fourth bit 204 of the PDM-QPSK symbol is determined from the three information bits 201, 202, 203 using the logical circuit 205, 206. The logical circuit comprises a first XOR gate 206 and a second XOR gate 204. The logical circuit 205, 206 ensures that the two polarization tributaries X and Y are either in-phase or with opposite phases with respect to one another. As a result, the PS-QPSK symbols 208 are obtained as a subset of the possible PDM-QPSK symbols.

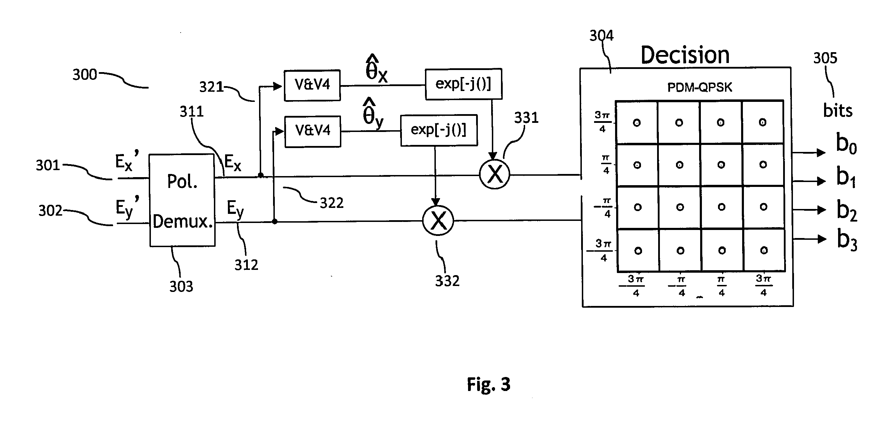

Fig.3 shows example blocks or components of a coherent receiver 300 for PDM-QPSK signals. The coherent receiver 300 comprises a polarization de-multiplexing unit 303 which is configured to de-multiplex the two polarization tributaries 301, 302 received at the coherent receiver 300, thereby yielding polarization de-multiplexed tributaries 311, 312. Furthermore, the coherent receiver 300 comprises carrier phase estimation units 321, 322 and carrier phase compensation units 331, 332. Subsequently, the compensated tributaries are passed to a decision unit 304 which determines the four bits 305 per PDM-QPSK symbol.

Polarization de-multiplexing of independent polarization tributaries is typically performed using adaptive filters in a butterfly structure (e.g. using a constant modulus algorithm (CMA) or a decision directed algorithm or a least mean square (LMS) algorithm). The symbol length or window length of the butterfly filter within the polarization de-multiplexing unit 303 may be N. The polarization de-multiplexing unit 303 may work at a higher sampling rate than the symbol rate, e.g. at twice the symbol rate, such that the length of the filter, i.e. the number of filter coefficients, may be higher than the symbol length or window length, e.g. twice the symbol length.

After polarization de-multiplexing, the phase offsets of the QPSK signals on the two polarization tributaries are independently estimated e.g. by 4th-power Viterbi and Viterbi (V&V4) carrier phase estimators (CPE). For instance, the estimated X phase offset is:

$$\theta_x = unwrap\left\{\frac{1}{4}\arg\left[\frac{1}{N_4}\sum_{k=-N_4/2}^{N_4/2}A_x^4(k)\left(e^{j\phi_x(k)}\right)^4\right]\right\}$$

where $\Phi_x(k)$ is the phasor of the received field at the k-th symbol $E_x(k)$ affected by the information phase, the phase offset and the phase noise (both induced by additive white Gaussian noise (AWGN) and possibly coming from the transmission line), while $A_x(x)=|E_x(k)|$ is its amplitude. k=1,...,K may be referred to as a time instant, an instant of time or a symbol time. $N_4$ is the number of V&V4 taps. The field phase is raised to power 4 in order to remove the QPSK modulation. The averaging over $N_4$ samples smoothens AWGN induced phase fluctuations on the fields.

Unwrapping ensures proper operation even in the presence of a frequency offset or in general for any time-varying phase to be tracked. The input argument of the unwrap function is restricted to the interval $(-\frac{\pi}{4},\frac{\pi}{4}]$. The estimated phase offset at the output of the unwrapper equals:

$$\theta_x = \psi_x + n_x\frac{\pi}{2}$$

where $-\frac{\pi}{4} < \psi_x \le \frac{\pi}{4}$ is the estimated offset modulo $\frac{\pi}{2}$, and $n_x$ is a (generally unknown) integer. A similar estimation is performed for the Y offset leading to:

$$\theta_y = \psi_y + n_y\frac{\pi}{2}$$

with $n_y$ being independent of $n_x$ and thus generally different from it. We will call $(n_x, n_y)$ the phase-ambiguity factors. After subtraction of the estimated phase offset, the phase of the X tributary is $\varphi_x = \phi_x - \theta_x$, and the phase of the Y tributary is $\varphi_y = \phi_y - \theta_y$.

The decision block 304 in Fig. 3 shows a representation on the (Phase of tributary X, Phase of tributary Y) plane, restricted modulo $2\Pi$ in each dimension, of the decision regions for the $4^2 = 16$ allowed PDM-QPSK symbols. Generally, the phase-ambiguity inherent from the use of the 4th-power Viterbi and Viterbi algorithm may be compensated by the use of differential coding/decoding. When using differential coding/decoding the fact of having different phase-ambiguity factors $(n_x = 2, n_y = 1$ for instance) on the X tributary and the Y tributary is not a problem as the information carried on the X tributary and the Y tributary are independent from each other, meaning that a decision with respect to the phase of the received symbol can be made independently for the X tributary and the Y tributary.

However, in the case of PS-QPSK where data symbols carried on the X tributary and the Y tributary are correlated by the relation $\varphi_x(k) - \varphi_y(k) = l\pi$, with I being an integer, the digital signal processing (DSP) used for independently modulated PDM-QPSK may have two shortcomings:

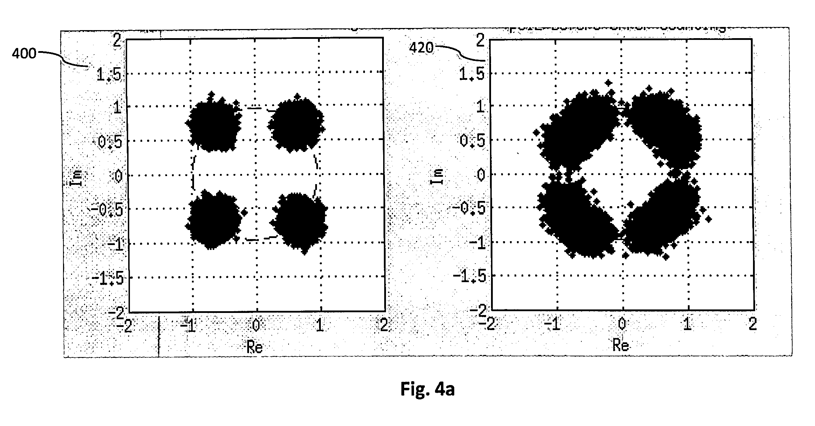

First of all, the polarization de-multiplexing stage based on a CMA or LMS (least mean square) algorithm is typically not able to de-multiplex PS-QPSK data. This is illustrated in Fig. 4a where symbols of an example tributary 311 or 312 after the polarization de-multiplexing unit 303 are illustrated. On the left side 400, the result of polarization de-multiplexing of a PDM-QPSK modulated signal is shown, whereas on the right side 420, the result of polarization de-multiplexing of a PS-QPSK modulated signal is shown. It can be seen that while the polarization de-multiplexing unit 303 provides distinct groups of symbols around the four constellation points of QPSK for the PDM-QPSK modulated signal, the polarization de-multiplexing does not work properly for the PS-QPSK modulated signal.

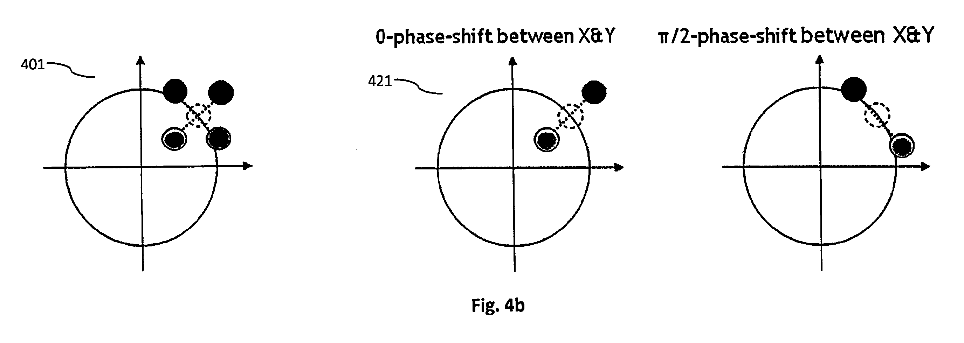

It has been identified that the reason for the poor performance of the polarization de-multiplexer 303 is the correlation between the two tributaries of a PS-QPSK modulated signal. In particular, it has been found that in the case of PDM-QPSK modulation, whatever the phase-shift between the X and Y polarizations, interferences on the transmission line yield amplitude random variations as shown in the diagram 401 of Fig. 4b. On the other hand, for PS-QPSK modulation, depending on the phase-shift between the X and Y polarizations, interferences yield either amplitude-only or phase-only variations, as illustrated in the diagrams 421 of Fig. 4b. Consequently, it can be stated that polarization de-multiplexer 303 only works properly for polarization tributaries which are independent from one another.

To overcome this limitation, the transmitter and receiver configurations may be modified as follows. In order to ensure a proper de-multiplexing of PS-QPSK signals, tributary decorrelation means may be introduced into the transmission system at the transmitter. Furthermore, complementary decorrelation means may be introduced at the receiver, wherein the complementary decorrelation means apply the inverse operation of the decorrelation means used at the receiver. The complementary decorrelation means should be applied subsequent to polarization de-multiplexing.

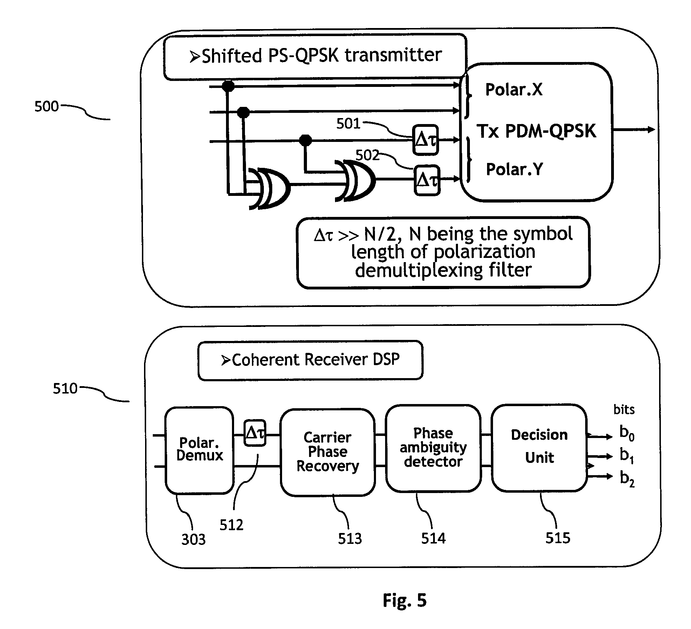

In an embodiment, a delay is introduced in the transmitter on one polarization tributary with respect to the other tributary. This is shown in the transmitter 500 of Fig. 5, where delay units 501 and 502 are introduced on the Y tributary. This delay may be chosen to be greater than half of the length of the polarization demultiplexing filter, i.e. greater than N/2. By choosing such a value, the polarization tributaries may be efficiently de-correlated so that the polarization de-multiplexing stage 303 can operate properly.

At the receiver side 510, subsequent to polarization de-multiplexing, the polarization tributaries may be time-re-aligned by delaying one polarization tributary with respect to the other one. This is illustrated by the delay unit 512 in Fig. 5. Measures such as polarization tagging or pilot tones could be used to identify the polarizations X and Y, and to thereby ensure that the delay is applied to the respective other polarization than the delay applied at the transmitter, i.e. delay is applied to the polarization which has not been delayed at the transmitter.

Subsequent to the time alignment of the two polarization tributaries, the carrier phase may be recovered and compensated in unit 513, as outlined in the context of Fig. 3. In addition, the receiver 510 may comprise a phase ambiguity detector 514 which takes into account the interdependence of the carrier phase within both polarization tributaries and which enforces the relationship $\varphi_x(k)$- $\varphi_y(k) = l\pi$, which is characteristic for PS-QPSK signals. The function of the phase ambiguity detector 514 will be outlined in further detail below. Finally, a joint decision 515 may be performed to detect the PS-QPSK symbols.

A second shortcoming of a coherent receiver for PDM-QPSK signals for the detection of PS-QPSK signals may be that the carrier phase recovery 513 performed independently on each polarization tributary is typically not sufficient to ensure the relationship $\varphi_x(k)-\varphi_y(k)=l\pi$ between polarization tributaries, which is due to the phase ambiguity inherent from the use of the 4th-power Viterbi and Viterbi algorithm.

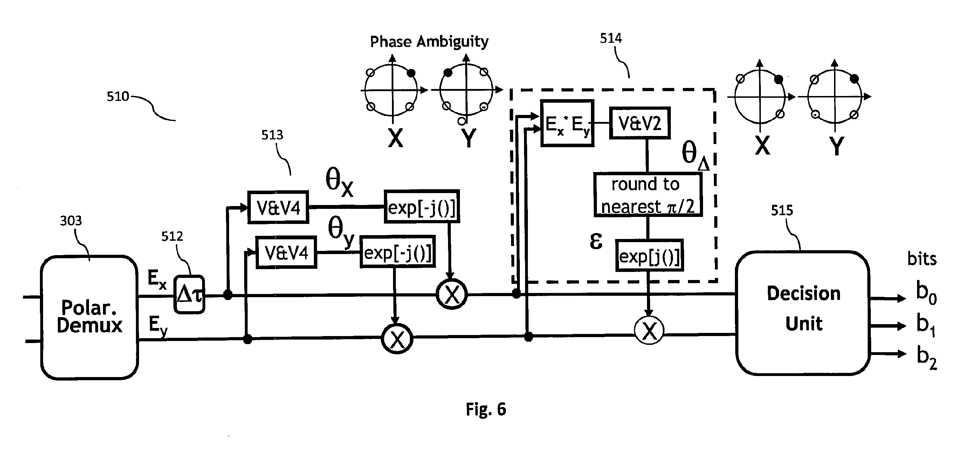

Fig. 6 shows in more details an example implementation of the phase ambiguity detector 514 for the PS-QPSK receiver 510, which may be used to enforce the above mentioned relationship $\varphi_x(k)-\varphi_y(k)=l\pi$ between the polarization tributaries. The phase relationship means that the estimated phase offset $\theta_x = \psi_x + n_x \dfrac{\pi}{2}$ of the X tributary should have the same (I even) or the opposite (I odd) phase ambiguity than the estimated phase offset $\theta_y = \psi_y + n_y \dfrac{\pi}{2}$ of the X tributary. In order to ensure that the phase relationship is satisfied, the following relation between the two V&V4 phase ambiguity factors may be enforced:

$$n_x + n_y = even.$$

In other words, subsequent to the phase estimation and compensation 513, the phase $\phi_x$ of the X tributary should correspond to the symbol phase $\varphi_x$, plus phase ambiguity $n_x \dfrac{\pi}{2}$. In a similar manner, the phase of the Y tributary

should be $\phi_y = \varphi_y + n_y \dfrac{\pi}{2}$. Knowing that for PS-QPSK $\varphi_x(k)$-$\varphi_y(k)=l\pi$, the differential phase ambiguity is

$\phi_y - \phi_y = \varphi_y - \varphi_y = \left(n_x - n_y\right)\dfrac{\pi}{2} = l\pi$. The phase ambiguity detector 514 has the task of detecting the differential

phase ambiguity $(n_x$- $n_y)$ $\pi/2$ and add the differential phase ambiguity (or equivalently subtract the differential ambiguity) to the estimated X phase offset $\theta_x = \psi_x + n_x \dfrac{\pi}{2}$, in order to obtain an X phase offset $\psi_x - n_y \dfrac{\pi}{2}$ (or $\psi_x + n_y \dfrac{\pi}{2}$)

that has an opposite (or exactly the same) phase ambiguity as the Y phase offset $\theta_y = \psi_y + n_y \dfrac{\pi}{2}$.

The phase ambiguity detector 514 of Fig. 6 combines the polarization tributary Y with the conjugate of the polarization tributary X. The field $E^*{}_x E_y$, where * stands for the conjugate, has a phase $\phi_x$ — $\phi_y$, which in noiseless PS-QPSK ideally takes on only O and n values. This phase difference $\theta_\Delta = \phi_x$ — $\phi_y$ may be estimated with a 2nd power V&V algorithm:

$$\theta_\Delta = \text{unwrap}\left\{\frac{1}{2}\text{arg}\left[\frac{1}{N_2}\sum_{k=-\lfloor N_2/2\rfloor}^{\lfloor N_2/2\rfloor}\left(E_x^*(k)E_y(k)\right)^2\right]\right\},$$

wherein $N_2$ is the number of the 2nd power V&V algorithm taps. The estimated value of $\theta_\Delta = \phi_x$ — $\phi_y$ can be smoothed out. It is proposed to select the value which is "rounded to the nearest $\Pi/2$" in order to force the phase ambiguity $\varepsilon$ to a noiseless multiple of $\Pi/2$. The phase ambiguity $\varepsilon$ is applied to one of the polarization tributaries (e.g. the Y tributary) in order to ensure that the phase ambiguities of the X and Y tributary are either the same or opposite from each other.

Once phase ambiguity has been resolved, the PS-QPSK enters in the decision block 515. The decision process combines information from both polarization tributaries. It can be made with a joint Maximum Likelihood decision by calculating the Euclidean distance of the field vector at the input of the decision block with respect to all 8 PS-QPSK symbol field vectors, and the closest symbol, along with its bit-mapping, is decided or selected.

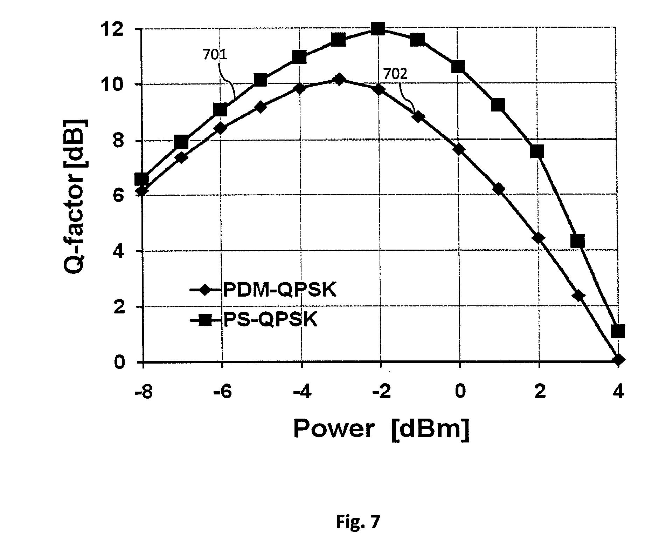

In order to demonstrate the benefit of this architecture, in particular the benefit of using PS-QPSK, a numerical simulation of transmission of both PDM-QPSK and PS-QPSK at 112Gb/s over a distance of 2,000km on a dispersion managed link with a Standard Single Mode Fiber has been performed. It should be noted that the aspects outlined in the present document are not limited to single mode fibers, but may also be applied to different modes of a multi mode fiber. Fig.7 shows an increase in the performance when using PS-QPSK (reference numeral 701) compared to the performance when using PDM-QPSK (reference numeral 702), both in terms of $Q^2$-factor (a measure for the bit error rate) and launch power by 2 dB and 1 dB respectively. This result demonstrates the benefit of the PS-QPSK modulation scheme in order to increase the robustness of 40G and 100G transmission systems against non linearities.

It should be noted that the above described transmission system, comprising a transmitter and a receiver, is not limited to PS-QPSK, but may be adapted to PS-MPSK modulation schemes, wherein M indicates the order of the PSK modulation scheme. In particular, M indicates the number of constellation points in the MPSK constellation diagram. In general, the above mentioned methods and systems may be applied to PS-MPSK modulated signals, with M being greater than 2, e.g. M=4 (QPSK), M=8, M=16, M=32, M=64, M=128. In this case, the carrier phase estimation and compensation unit 513 may use a M$^{th}$ power Viterbi and Viterbi CPE, wherein the estimated X phase offset (an in a similar manner the Y phase offset) may be determined as:

$$\theta_x = \text{unwrap}\left\{\frac{1}{M}\text{arg}\left[\frac{1}{N_M}\sum_{k=-N_M/2}^{N_M/2}A_x^M(k)\left(e^{j\phi_x(k)}\right)^M\right]\right\},$$

wherein $N_M$ is the number of taps of the M$^{th}$ power Viterbi and Viterbi algorithm. Furthermore, the phase ambiguity detector 514 could use a $(M/2)^{th}$ power Viterbi and Viterbi algorithm in order to determine an estimate of the phase difference:

$$\theta_\Delta = unwrap\left\{\frac{1}{2}\arg\left[\frac{1}{\hat{N}_M}\sum_{k=-\hat{N}_M/2}^{\hat{N}_M/2}\left(E_x^*(k)E_y(k)\right)^2\right]\right\},$$

wherein $\hat{N}_M$ is the number of taps of the $(M/2)^{th}$ power Viterbi and Viterbi algorithm. It is proposed to select the value which is "rounded to the nearest $2\pi/M$" in order to force the phase ambiguity to a noiseless multiple of $2\pi/M$.

In the present document, an optical transmission system using PS-QPSK has been described. In particular, an optical transmitter and receiver for a PS-QPSK transmission system have been described. It has been shown how a PDM-QPSK transmitter and/or receiver may be enabled to transmit and/or receive PS-QPSK signals. The modifications of the PDM-QPSK transmitter and/or receiver may be implemented as software within the digital signal processing of the transmitter and/or receiver, thereby enabling a simple and cost effective modification. It has been demonstrated that a significant performance improvement of 2dB may be expected compared to a standard PDM-QPSK solution due to the higher robustness in the linear and non linear regime.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Furthermore, it should be noted that steps of various above-described methods and components of described systems can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

In addition, it should be noted that the functions of the various elements described in the present patent document may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included.

Finally, it should be noted that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1.    An apparatus (500) for an optical transmitter of an optical polarization switched M-PSK signal comprising a first and a second polarization, with $M = 2^m$ and m ≥ *1,* the apparatus (500) comprising:

- mapping means (200) configured to

- map, at a time instant k=1,...,K, *m* information bits to an M-PSK constellation point, thereby generating a first symbol at time instant k for the first polarization;
- assign, at the time instant k, one further information bit by generating a second symbol at time instant k for the second polarization, wherein the second symbol at time instant k corresponds to the first symbol at time instant k, or corresponds to the constellation point opposite the constellation point of the first symbol at time instant k; and
- repeat the mapping and assigning steps for all k=1,...,K to generate a sequence of first and second symbols for the first and second polarization, respectively;

- decorrelation means (501, 502) configured to decorrelate the first symbol at time instant k and the second symbol at time instant k, for all k=1,...,K.

2. The apparatus (500) of claim 1, wherein

- the decorrelation means (501, 502) comprise a delay unit (501, 502) configured to delay the sequence of first symbols and the sequence of second symbols with respect to one another by a pre-determined delay value.

3. The apparatus (500) of claim 2, wherein

- the delay value is greater than half of a window length of a polarization de-multiplexing filter configured to de-multiplex the first and second polarizations from the optical polarization switched M-PSK signal.

4. The apparatus (500) of any previous claim, further comprising

- a modulation unit configured to

- modulate a phase of a first polarization of an optical signal using symbol phases of the sequence of first symbols; and
- modulate a phase of a second polarization of the optical signal using symbol phases of the sequence of second symbols, wherein the first and second polarizations are orthogonal with respect to one another;

thereby generating the optical polarization switched M-PSK signal.

5. A digital signal processor (510) of a coherent optical receiver (510) for a polarization switched M-PSK modulated optical signal comprising a first and an orthogonal second polarization, with $M = 2^m$ and $m \geq 1,$ the digital signal processor (500) comprising:

- reception means configured to receive a complex inphase signal and a complex quadrature signal, indicative of a sequence of first symbols and a sequence of second symbols at time instants k=1,...,K; wherein the sequences of first and second symbols have been obtained by

- mapping, at the time instant k, $m$ information bits to an M-PSK constellation point, thereby generating a first symbol at time instant k;
- assigning, at the time instant k, one further information bit by generating a second symbol at time instant k, wherein the second symbol at time instant k corresponds to the first symbol at time instant k, or corresponds to the constellation point opposite the constellation point of the first symbol at time instant k;
- repeating the mapping and assigning steps for all k=1,...,K to generate the sequences of first and second symbols; and
- decorrelating the first symbol at time instant k and the second symbol at time instant k, for all k=1,...,K;

wherein the sequences of first and second symbols have been modulated onto the first and second polarization of the polarization switched M-PSK modulated optical signal, respectively; wherein the polarization switched M-PSK modulated optical signal has been transmitted over a distorting transmission channel; and wherein the distorted polarization switched M-PSK modulated optical signal has been converted into the complex inphase signal and the complex quadrature signal;
- a polarization de-multiplexer (303) configured to provide a first signal (311) indicative of the sequence of first symbols and a second signal (312) indicative of the sequence of second symbols;
- inverse decorrelation means (512) configured to apply to the first and second signal an operation which is inverse to the decorrelating, thereby re-correlating the sequences of first and second symbols.

6. The digital signal processor (510) of claim 5, wherein the inverse decorrelation means (512) comprises

- a delay unit (512) configured to delay the sequence of first symbols and the sequence of second symbols with respect to one another by a pre-determined delay value.

7. The digital signal processor (510) of claim 6, wherein

   - the polarization de-multiplexer (303) comprises a polarization de-multiplexing filter with a pre-determined window length ; and
   - the delay value is greater than half of the window length of the polarization de-multiplexing filter.

8. The digital signal processor (510) of any of claims 5 to 7, further comprising a carrier phase recovery unit (513) configured to

   - estimate (312, 322) a carrier phase of the optical signal in the first and orthogonal second polarization from the first and second signal, respectively; and
   - compensate (331, 332) phase values of the sequences of first and second symbols using the estimate of the phases of the optical signal in the first and orthogonal second polarization, respectively.

9. The digital signal processor (510) of claim 8, further comprising a phase ambiguity detector (514) configured to modify a phase value of the first symbol of the sequence of first symbols relative to a phase value of the corresponding second symbol of the sequence of second symbols based on the fact that the phases of corresponding first and second symbols at time instant k should be equal or should be shifted by $\Pi$.

10. The digital signal processor (510) of claim 9, wherein the phase ambiguity detector (514) is configured to determine a phase difference between corresponding symbols of the sequences of first and second symbols.

11. The digital signal processor (510) of claim 10, wherein the phase difference of the first and second symbol at time instant k is determined as

$$\theta_\Delta = unwrap\left\{\frac{1}{2}\arg\left[\frac{1}{\hat{N}_M}\sum_{k=-\hat{N}_M/2}^{\hat{N}_M/2}\left(E_x^*(k)E_y(k)\right)^2\right]\right\},$$

wherein $E^*_x(k)$ is a conjugate of the first symbol, $E_y(k)$ is the second symbol, and $\hat{N}_M$ is a number of taps.

12. The digital signal processor (510) of claim 11, wherein the phase ambiguity detector (514) is further configured to round the phase difference to the nearest multiple of $\dfrac{\pi}{2}$.

13. The digital signal processor (510) of any of claim 10 to 12, wherein the phase ambiguity detector (514) is further configured to modify the phase value of the first or second symbol by the determined phase difference.

14. The digital signal processor (510) of any of claim 5 to 13, further comprising a decision unit (515) configured to determine m+1 information bits from corresponding symbols of the sequences of first and second symbols.

15. An optical transmission system comprising

   - an optical transmitter comprising an apparatus according to any of claims 1 to 4; and
   - a coherent optical receiver comprising a digital signal processor according to any of claims 5 to 14.

**Fig. 1**

**Fig. 2**

300

321

311

301 $E_x'$

302 $E_y'$

Pol.
Demux.
303

$E_x$

$E_y$

312

322

V&V4 $\hat{\theta}_x$ exp[-j()]

V&V4 $\hat{\theta}_y$ exp[-j()]

331

X

332

X

304 Decision

305

PDM-QPSK

| | $\frac{3\pi}{4}$ | $\frac{\pi}{4}$ | $\frac{\pi}{4}$ | $\frac{3\pi}{4}$ |
|---|---|---|---|---|
| $\frac{3\pi}{4}$ | ⊙ | ⊙ | ⊙ | ⊙ |
| $\frac{\pi}{4}$ | ⊙ | ⊙ | ⊙ | ⊙ |
| $-\frac{\pi}{4}$ | ⊙ | ⊙ | ⊙ | ⊙ |
| $-\frac{3\pi}{4}$ | ⊙ | ⊙ | ⊙ | ⊙ |

bits

$b_0$

$b_1$

$b_2$

$b_3$

**Fig. 3**

Fig. 4a

Fig. 4b

EP 2 506 458 A1

**Fig. 5**

**Fig. 6**

Fig. 7

EP 2 506 458 A1

Europäisches
Patentamt
European
Patent Office
Office européen
des brevets

## EUROPEAN SEARCH REPORT

Application Number

EP 11 29 0152

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MAGNUS KARLSSON ET AL: "Which is the most power-efficient modulation format in optical links?", OPTICS EXPRESS, vol. 17, no. 13, 22 June 2009 (2009-06-22), page 10814, XP55006998, ISSN: 1094-4087, DOI: 10.1364/OE.17.010814 * Section 3; page 10816 - page 10817; figures 2a,2b * ----- | 1-15 | INV. H04B10/155 H04L27/34 |
| Y | P. POGGIOLINI ET AL: "Performance evaluation of coherent WDM PS-QPSK (HEXA) accounting for non-linear fiber propagation effects", OPTICS EXPRESS, vol. 18, no. 11, 24 May 2010 (2010-05-24), page 11360, XP55007069, ISSN: 1094-4087, DOI: 10.1364/OE.18.011360 * page 11362, lines 18-22; figure 1 * ----- | 5-15 | |
| Y | JIN-XING CAI ET AL: "Transmission of 96 $\,\times\,$ 100-Gb/s Bandwidth-Constrained PDM-RZ-QPSK Channels With 300% Spectral Efficiency Over 10610 km and 400% Spectral Efficiency Over 4370 km", JOURNAL OF LIGHTWAVE TECHNOLOGY, IEEE SERVICE CENTER, NEW YORK, NY, US, vol. 29, no. 4, 1 February 2011 (2011-02-01), pages 491-498, XP011329358, ISSN: 0733-8724, DOI: 10.1109/JLT.2010.2093931 * Section II Experimental set up; page 491 - page 492 * ----- -/-- | 1-15 | TECHNICAL FIELDS SEARCHED (IPC) H04B H04L |

The present search report has been drawn up for all claims

| Place of search | Date of completion of the search | Examiner |
|---|---|---|
| Munich | 26 September 2011 | De Vries, Jane |

EPO FORM 1503 03.82 (P04C01)

**Europäisches Patentamt**
**European Patent Office**
**Office européen des brevets**

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2004/081247 A1 (CHANG DAE IG [KR] ET AL) 29 April 2004 (2004-04-29) * paragraphs [0031], [0039]; figure 5 * ----- | 9-13 | |
| A | AGRELL E ET AL: "Power-Efficient Modulation Formats in Coherent Transmission Systems", JOURNAL OF LIGHTWAVE TECHNOLOGY, IEEE SERVICE CENTER, NEW YORK, NY, US, vol. 27, no. 22, 15 November 2009 (2009-11-15), pages 5115-5126, XP011271504, ISSN: 0733-8724, DOI: 10.1109/JLT.2009.2029064 * page 5116, column 1, line 32 - column 2, line 14 * * page 5120, column 2, lines 13-25; figure 3 * ----- | 1-15 | |
| A | SERENA P ET AL: "The performance of polarization switched-QPSK (PS-QPSK) in dispersion managed WDM transmissions", OPTICAL COMMUNICATION (ECOC), 2010 36TH EUROPEAN CONFERENCE AND EXHIBITION ON, IEEE, PISCATAWAY, NJ, USA, 19 September 2010 (2010-09-19), pages 1-3, XP031789673, ISBN: 978-1-4244-8536-9 * Section . Introduction and Numerical set-up; page 1 - page 2; figure 1 * ----- | 1-15 | TECHNICAL FIELDS SEARCHED (IPC) |
| A | JP 2005 124177 A (SANYO ELECTRIC CO) 12 May 2005 (2005-05-12) * abstract * ----- | 1-15 | |

The present search report has been drawn up for all claims

| Place of search | Date of completion of the search | Examiner |
|---|---|---|
| Munich | 26 September 2011 | De Vries, Jane |

EPO FORM 1503 03.82 (P04C01)

**EP 2 506 458 A1**

## ANNEX TO THE EUROPEAN SEARCH REPORT
## ON EUROPEAN PATENT APPLICATION NO.

EP 11 29 0152

26-09-2011

| Patent document cited in search report | | Publication date | Patent family member(s) | | Publication date |
|---|---|---|---|---|---|
| US 2004081247 | A1 | 29-04-2004 | KR | 20040036996 A | 04-05-2004 |
| JP 2005124177 | A | 12-05-2005 | JP | 3992703 B2 | 17-10-2007 |

EPO FORM P0459